# EUROPÄISCHE PATENTANMELDUNG

(11) **EP 1 382 430 A1**
(43) Veröffentlichungstag der Anmeldung: **21.01.2004**
(21) Anmeldenummer: 03012876.3
(22) Anmeldetag: 06.06.2003
(51) Int. Cl.: B29C 47/92

(54) **Steuerung für eine Kompaktanlage**

(30) Priorität: 20.07.2002 DE 10233136
(71) Anmelder: Battenfeld Extrusionstechnik GmbH, 32547 Bad Oeynhausen (DE)
(72) Erfinder: Kopp, Martin, 32425 Minden (DE)

(57) **Zusammenfassung**

Die Erfindung betrifft eine Steuerung einer Vorrichtung zum Erzeugen von Kunststoffprodukten, die mindestens die Komponenten Extruder (1), Extrusionswerkzeug (2), Kalibriereinrichtung (3), Abzugsvorrichtung (4) und Ablängvorrichtung (5) umfasst, wobei die Steuerung die Ablängvorrichtung (5) in Abhängigkeit des zu erzeugenden Kunststoffproduktes aktiviert.

Erfindungsgemäß ist vorgesehen, dass mehrere der Komponenten mindestens eine digitale Schnittstelle aufweisen und mit einer SPS in Verbindung stehen.

Das erfindungsgemäße Verfahren zum Steuern einer Ablängvorrichtung (5) sieht vor, dass mehrere der Komponenten (1, 2, 3, 4) über eine digitale Schnittstelle Istwerte als Eingangsgrößen an eine SPS übermitteln, wobei diese Eingangsgrößen über eine Komparatorfunktion mit Sollwerten zu einem Triggersignal verarbeitet werden, wobei das Triggersignal über eine digitale Schnittstelle an die Ablängvorrichtung übermittelt wird und den Ablängvorgang auslöst.

## Beschreibung

Die Erfindung betrifft die Steuerung einer Vorrichtung zum Erzeugen von Kunststoffprodukten, die mindestens die Komponenten Extruder, Extrusionswerkzeug, Kalibriereinrichtung, Abzugsvorrichtung und Ablängvorrichtung umfasst.

Steuerungen der gattungsgemäßen Art sind dahingehend bekannt, dass eine Längenmessung des laufenden Extrudats über ein Laufrad mit einem Impulsgeber und einer Auswertung über ein Zählerbaustein erfolgt. Eine weitere bekannte Alternative der Längenmessung des Extrudats ist die Drehzahlrückführung aus dem Antrieb der Abzugsvorrichtung. Aus diesen Informationen wird festgelegt, wann eine Ablängvorrichtung wie Stanze oder Säge aktiviert wird, um gleiche Längen eines Profiles zu erzeugen.

Alle bekannten Steuerungen haben gemein, dass sie auf ein zu erzeugendes Produkt abgestellt sind. Ein Wechsel des Produktes oder des Werkzeuges bedarf einer Korrektur der Ablängparameter, die beispielsweise die Säge ansteuern.

Weiterentwicklungen von Extrusionsanlagen sind modulartig aufgebaut und bieten so die Möglichkeit, einzelne Komponenten auszutauschen, um so beispielsweise die Extruderleistung zu erhöhen. Hierdurch treten in einem System, je nach Konfiguration, unterschiedliche Parameter auf, die nicht ohne Änderungen an eine Ablängvorrichtung übergeben werden können.

Aufgabe der Erfindung ist es, eine Steuerung anzubieten, die in Abhängigkeit der eingesetzten Komponentenkombination das Ablängen vorgegebener Längen des Extrudats ermöglicht.

Die Lösung der Aufgabe ist in Verbindung mit dem Oberbegriff des Anspruchs 1 dadurch gekennzeichnet, dass mehrere der Komponenten mindestens eine digitale Schnittstelle aufweisen und mit einer SPS in Verbindung stehen.

Weiterbildungsgemäß ist vorgesehen, daß die Verbindung zur SPS über ein lokales Netzwerk (LAN) erfolgt. Durch entsprechende Zusatzeinrichtungen, wie beispielsweise einer ISDN-Karte oder ein SIM-Karte, ist aber auch die Verbindung über das Internet oder Mobilfunknetz zu einer zentralen Steuerung möglich. Die Verbindung zur SPS kann aber auch über eine andere kabellose Verbindung wie Funk oder Infrarot erfolgen, ebenso ist als schnelle Verbindung eine Glasfaserverbindung unter den Bauteilen denkbar.

Damit die Istdaten für eine Auswertung zur Verfügung stehen, ist eine Speichereinheit vorgesehen. Dies kann ein Festplatte im System oder eine Chipkarte oder ähnliches sein.

Weiterhin ist die Erfindung durch ein Verfahren zum Steuern einer Ablängvorrichtung gekennzeichnet, wobei mehrere der Komponenten über eine digitale Schnittstelle Istwerte als Eingangsgrößen an eine SPS übermitteln, wobei diese Eingangsgrößen über eine Komparatorfunktion mit Sollwerten zu einem Triggersignal verarbeitet werden, wobei das Triggersignal über eine digitale Schnittstelle an die Ablängvorrichtung übermittelt wird und den Ablängvorgang auslöst.

Vorteilhafterweise ist diese lokale Intelligenz über die digitalen Schnittstellen mit verschiedenen Bediensystemen (z.B. dem des Extruders) verbunden, wodurch alle Vorgänge überwacht und im Bedarfsfall manuell beeinflußt werden können. Der Einsatz einer lokalen Intelligenz ermöglicht außerdem, einzelne Maschinenkomponenten (z.B. Extruder) zu tauschen, ohne die Ablängfunktion zu verlieren.

Die Istwerte können gespeichert und anschließend manuell oder über mathematisch/statistische Funktionen (Mittelwertbildung, Toleranzbandvergabe, Standardabweichung) ausgewertet werden. Die so ermittelten Ergebnisse bringen neue Sollwerte, die in der Steuerung hinterlegt werden können. Der gesamte Prozess wird somit optimiert.

Besonders vorteilhaft ist es, wenn die Komparatorfunktion Bestandteil des Antriebsreglers ist. Die Steuerelektronik der Abzugsvorrichtung wird mit einem Softwaremodul ergänzt, um die Komparatorfunktion zu erfüllen.

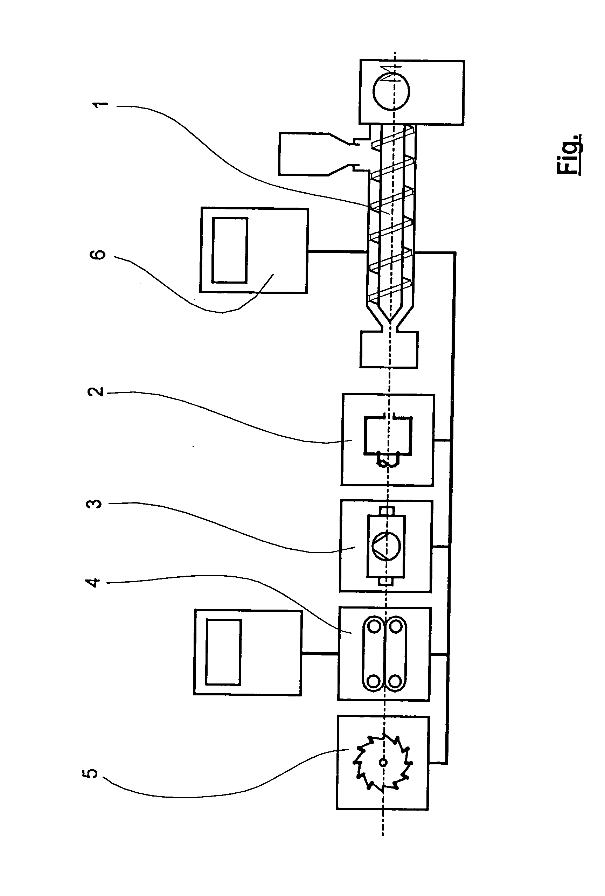

In der Zeichnung ist schematisch ein Ausführungsbeispiel dargestellt, das den Kern der Erfindung wiedergibt.

Die Figur zeigt eine Extrusionsanlage mit einem Extruder 1, einem Extrusionswerkzeug 2, einer Kalibriereinrichtung 3 mit einem nachgeschalteten Abzug 4 und einer Säge 5 als Ablängvorrichtung. Alle Komponenten sind über eine digitale Schnittstelle mit einer SPS verbunden. Die Informationen werden gleichzeitig am Bedienpult 6 des Extruders 1 angezeigt und sind auch von dort aus manipulierbar.

Über diese digitale Verbindung jeder der Komponenten mit der SPS ist es möglich, aktuelle Prozeßdaten wie Schmelzedruck, Zuggeschwindigkeit, Temperatur etc. online abzurufen bzw. zu ermitteln. Der Vergleich mit bekannten Sollwerten ergibt eine aktuelle Abweichung. Diese Größe kann wiederum dazu verwendet werden, ein Triggersignal zu erzeugen, mit dem exakt die Säge 5 gesteuert werden kann. Es ist folglich unerheblich, welche Komponente gerade aktuell im System integriert ist. Die aktuellen Parameter werden übermittelt, ausgewertet und in deren Abhängigkeit wird die Ablängvorrichtung betätigt.

Durch diese Steuerung wird ein logisches System angeboten, mit dem nicht nur eine automatische Anpassung nach einem Wechsel einer oder mehrerer Komponenten erfolgt, sondern auch im laufenden Prozeß eine automatische Korrektur erfolgt.

Weiterhin ist es möglich, im laufenden Prozeß das gewünschte abzulängende Profilmaß zu ändern, es wird bei den Profilen insbesondere an Rohr- oder Fensterprofile gedacht, wobei auch andere Anwendungen denkbar sind.

### Bezugszeichenliste:

- 1: Extruder
- 2: Extrusionswerkzeug
- 3: Kalibriereinrichtung
- 4: Abzugsvorrichtung
- 5: Ablängvorrichtung
- 6: Bedienpult

## Patentansprüche

1. Steuerung einer Vorrichtung zum Erzeugen von Kunststoffprodukten, die mindestens die Komponenten
Extruder (1),
Extrusionswerkzeug (2),
Kalibriereinrichtung (3),
Abzugsvorrichtung (4) und
Ablängvorrichtung (5) umfasst,
wobei die Steuerung die Ablängvorrichtung (5) in Abhängigkeit des zu erzeugenden Kunststoffproduktes aktiviert,
**dadurch gekennzeichnet, dass**
mehrere der Komponenten mindestens eine digitale Schnittstelle aufweisen und mit einer SPS in Verbindung stehen.

2. Steuerung nach Anspruch 1, **dadurch gekennzeichnet, dass** die Verbindung der Komponenten mit der SPS über ein lokales Netzwerk erfolgt.

3. Steuerung nach Anspruch 1 oder 2, **dadurch gekennzeichnet, dass** die Verbindung zur SPS kabellos erfolgt.

4. Steuerung nach Anspruch 3, **dadurch gekennzeichnet, dass** die Verbindung zur SPS über Funk oder Infrarot erfolgt.

5. Steuerung nach einem der vorigen Ansprüche, **dadurch gekennzeichnet, dass** die Steuerung über Speichereinheiten verfügt.

6. Verfahren zum Steuern einer Ablängvorrichtung (5), wobei mehrere der Komponenten (1, 2, 3, 4) über eine digitale Schnittstelle Istwerte als Eingangsgrößen an eine SPS übermitteln,
wobei diese Eingangsgrößen über eine Komparatorfunktion mit Sollwerten zu einem Triggersignal verarbeitet werden,
wobei das Triggersignal über eine digitale Schnittstelle an die Ablängvorrichtung übermittelt wird und den Ablängvorgang auslöst.

7. Verfahren nach Anspruch 6, **dadurch gekennzeichnet, dass** übermittelte Istwerte gespeichert werden können.

8. Verfahren nach Anspruch 6, **dadurch gekennzeichnet, dass** die gespeicherten Istwerte ausgewertet werden und durch entsprechende Mittelwertbildung in Verbindung mit einem Toleranzband neue Sollwerte ermittelt werden können.

9. Kompaktextrusionsanlage nach mindestens einem der vorigen Ansprüche, **dadurch gekennzeichnet, dass** die Komparatorfunktion Bestandteil des Antriebsreglers, der Steuerelektronik der Abzugsvorrichtung, ist.
